# EUROPÄISCHE PATENTSCHRIFT

(11) **EP 3 111 492 B1**
(45) Veröffentlichungstag und Bekanntmachung des Hinweises auf die Patenterteilung: **21.08.2019**
(21) Anmeldenummer: 15712781.2
(22) Anmeldetag: 03.02.2015
(51) Int. Cl.: H01M 4/36, H01M 8/1009, H01M 10/36, H01M 10/38, H01M 12/08

(54) **ELEKTROCHEMISCHER ENERGIESPEICHER SOWIE VERFAHREN ZUM BETREIBEN DESSELBEN**
ELECTROCHEMICAL ENERGY STORE AND METHOD FOR OPERATING THE SAME
ACCUMULATEUR D'ÉNERGIE ÉLECTROCHIMIQUE ET SON PROCÉDÉ DE FONCTIONNEMENT

(30) Priorität: 25.02.2014 DE 102014002451
(43) Veröffentlichungstag der Anmeldung: 04.01.2017
(73) Patentinhaber: Forschungszentrum Jülich GmbH, 52425 Jülich (DE)
(72) Erfinder: UHLENBRUCK, Sven, 50259 Pulheim (DE); FINSTERBUSCH, Martin, 52428 Jülich (DE); HAMMER, Eva Maria, Surrey TW10 7DU (GB); BUCHKREMER, Hans Peter, 52525 Heinsberg (DE)
(86) Internationale Anmeldenummer: PCT/DE2015/000040
(87) Internationale Veröffentlichungsnummer: WO 2015/127915

(56) Entgegenhaltungen:
- WO-A1-2004/077596
- HARRY ABERNATHY ET AL: "Basic properties of a liquid tin anode solid oxide fuel cell", JOURNAL OF POWER SOURCES, ELSEVIER SA, CH, Bd. 196, Nr. 10, 17. Dezember 2010 (2010-12-17), Seiten 4564-4572, XP028185629, ISSN: 0378-7753, DOI: 10.1016/J.JPOWSOUR.2010.12.089 [gefunden am 2011-01-07]
- HAHN S K ET AL: "Thermodynamic investigation of antimony + oxygen and bismuth + oxygen using solidstate electrochemical techniques", JOURNAL OF CHEMICAL THERMODYNAMICS, ACADEMIC PRESS, LONDON, GB, Bd. 11, Nr. 7, 1. Juli 1979 (1979-07-01), Seiten 627-637, XP023945241, ISSN: 0021-9614, DOI: 10.1016/0021-9614(79)90028-4 [gefunden am 1979-07-01]

## Beschreibung

Die Erfindung betrifft einen Energiespeicher, insbesondere einen mehrfach aufladbaren elektrochemischen Energiespeicher. Die Erfindung betrifft ferner ein Verfahren zum Betreiben des vorgenannten Energiespeichers.

### Stand der Technik

Um größere Mengen an elektrischer Energie - zum Beispiel für stationäre Energiezwischenspeicherung - kostengünstig speichern zu können, benötigt man reversibel arbeitende elektrochemische Speicher mit geeigneten Energiedichten, die zu großen Größen skalierbar und möglichst einfach in der Herstellung sind. Unter einer elektrischen Batterie ist eine Zusammenschaltung mehrerer gleichartiger galvanischer Zellen bzw. Elemente zu verstehen. Streng genommen bezieht sich der Begriff "Batterie" nur auf nicht wiederaufladbare, so genannte "Primärzellen" bzw. "Primärelemente". Im Unterschied dazu werden als "Akkumulatoren" (kurz: Akkus) die wiederaufladbaren "Sekundärzellen" oder auch "Sekundärelemente" benannt. Der Begriff "Batterie" ist aber in letzter Zeit etwas aufgeweicht worden, so dass im Rahmen dieser Erfindung im Folgenden auch für wiederaufladbare Energiespeicher verallgemeinernd der Begriff "Batterie" verwendet wird.

Grundsätzlich gibt es für unterschiedliche Anforderungen auch unterschiedliche Batterietypen, die sich vom Spannungsverlauf bis hin zur Haltbarkeit unterscheiden und auch entsprechend eingesetzt werden sollten.

Die unterschiedlichen Batterietypen setzen in der Regel unterschiedliche Speichermaterialien (Aktivmaterialien) ein, welche in wenigstens einer reduzierten und einer oxidierten Form (Redoxpaar) vorliegen können. Mit Hilfe dieses Aktivmaterials kann überschüssige elektrische Energie (z. B. aus Wind- oder Sonnenenergie) zur Reduktion der oxidierten Form des Aktivmaterials, zum Beispiel Metalloxid, genutzt werden. Der Speicher wird dabei aufgeladen. Bei Bedarf kann das reduzierte Aktivmaterial, zum Beispiel Metall, dann wieder oxidiert werden, wodurch elektrische Energie frei wird. Der Speicher wird entladen.

Das verwendete Aktivmaterial (Redoxpaar) bestimmt die Nennspannung der Zelle, während die Menge des Aktivmaterials den Energieinhalt der Zelle beeinflusst.

Bei Energiespeichern sind - neben den allgemein bekannten und gebräuchlichen Typen wie z. B. Zink-Kohle-Batterien, Alkali-Mangan-Batterien oder Blei-, NiCd-, NiMH- bzw. Li-lonen-Akkumulatoren - inzwischen unterschiedliche Ausführungsarten von Batterien bekannt, die nachfolgend kurz skizziert werden.

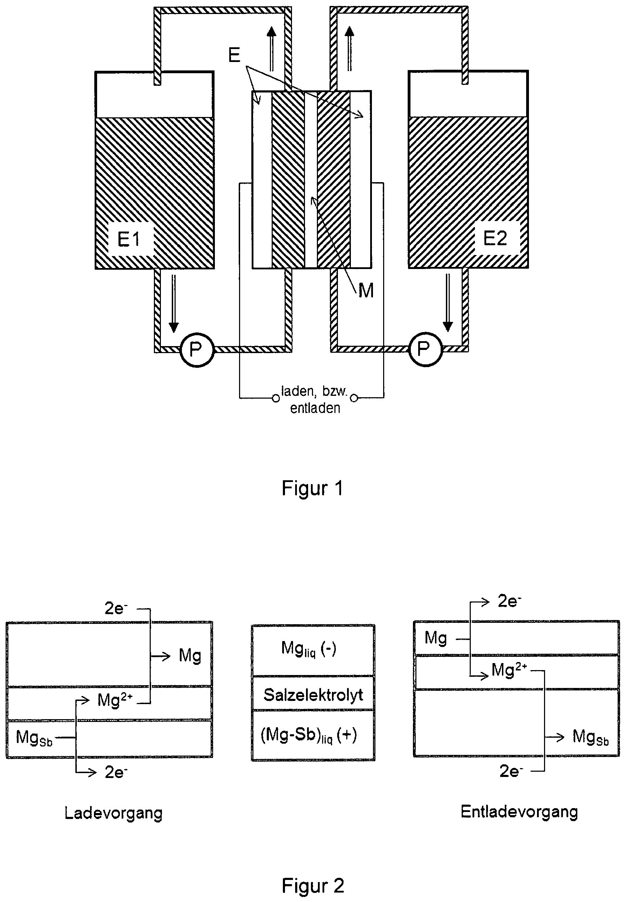

Eine Ausführungsart sind die Redox-Flow-Batterien, wie sie schematisch in Figur 1 dargestellt ist. Bei ihnen wird die elektrische Energie in chemischen Verbindungen (Aktivmaterial) gespeichert, die bei Raumtemperatur jeweils in einem Lösungsmittel in gelöster Form vorliegen. Dazu zirkulieren in zwei durch eine Membran getrennten Kreisläufen jeweils die das Aktivmaterial umfassenden Elektrolyte. Der lonenaustausch erfolgt über die Membran. Die Zellenspannung liegt bei diesen Systemen regelmäßig zwischen 1,0 und 2,2 V. Als Lösungsmittel werden entweder anorganische oder organische Säuren verwendet. Als Aktivmaterial (Redoxpaar) sind Verbindungen aus Titan, Eisen, Chrom, Vanadium, Cer, Zink, Brom und Schwefel bekannt.

Da die die Energie speichernden Verbindungen aufweisenden Elektrolyte außerhalb der Zelle in getrennten Tanks gelagert werden können, ist dieser Batterietyp ein Beispiel von elektrochemischen Energiespeichern, bei dem die Energiemenge über die Elektrolytmenge und die Leistung über die Größe der Elektrodenoberfläche vorteilhaft unabhängig voneinander variiert und skaliert werden können. Ein weiterer Vorteil ist, dass bei einem Stillstand der Anlage praktisch keine Selbstentladung auftritt.

Im Vergleich zu anderen Speichertechnologien hat die Redox-Flow-Batterie einen hohen Wirkungsgrad, eine gute Vermeidbarkeit von Selbstentladung und eine hohe Lebenserwartung, da u. a. das Elektrodenmaterial, meist Graphit, an der elektrochemischen Reaktion des Elektrolyten selbst nicht teilnimmt, und daher auch nicht degeneriert. Allerdings sind die bislang mit Redox-Flow-Batterie erzielten Energiedichten noch vergleichsweise gering.

Ferner werden zur Betriebsführung umfangreiche apparative Zusatzaggregate, wie z. B. Pumpen etc. benötigt, die für den Einsatz der in der Regel korrosiven Elektrolyten geeignet sein müssen. Ferner sind auf Grund der meist geringen Löslichkeit der Aktivmaterialien in einem Lösungsmittel, zumeist Wasser, große Volumenströme zu bewegen bzw. zu steuern.

Ein weiterer Batterietyp ist die Hochtemperatur-Flüssigmetall-Batterie. Bekanntes Beispiel dafür ist z. B. das Natrium-Schwefel-System. Bei dieser Form der Batterien werden üblicherweise zwei flüssige Materialien als Elektroden, getrennt durch einen festen Elektrolyten, als Reaktionspartner eingesetzt. Die Betriebstemperatur liegt typischerweise um die 700 °C. Die hohen Temperaturen sind notwendig, um die Elektroden in einen flüssigen Zustand zu bringen und um den keramischen Elektrolyten leitfähig zu machen. Nur im flüssigen Zustand können die Elektroden an der Lade- und Entladereaktion teilnehmen. Solche Batterien können beispielsweise als stationärer Energiespeicher in Wind- und Sonnenkraftwerken eingesetzt werden.

Sicherheitskritisch bei dieser Art von Batterie ist ein Bruch des Elektrolyten, bei dem es im Anschluss zu einer unkontrollierten Reaktion zwischen den Reaktionspartnern und somit unkontrollierter Energiefreisetzung kommen kann.

Daneben ist aus den USA ein weiterer Flüssigmetall-Akku bekannt, bei dem die Anode aus Magnesium, der Elektrolyt aus dem geschmolzenen Salzelektrolyten MgCl₂-KCl-NaCl und die Kathode aus Antimon (Sb) besteht. Das Funktionsprinzip wird aus Figur 2 deutlich.

Der Aufbau und die Wirkungsweise des vorgenannten Flüssigmetall-Akkus ist wie folgt: Beim Aufheizen auf ca. 700 °C schmelzen die Materialien, ein Gemisch aus den gemahlenen Metallen Magnesium und Antimon zusammen mit der Salzmischung MgCl₂-KCl-NaCl auf und bilden dabei auf Grund der unterschiedlichen spezifischen Dichten drei horizontale Schichten aus.

Die oberste Schicht umfasst das reine Magnesium und dient als negative Elektrode. Die untere Schicht besteht aus einer Magnesium-Antimon-Legierung, welche die positive Elektrode des Akkus bildet. Als Zwischenschicht formt sich eine Salzschicht aus Magnesium, Kalium, Natrium und Chlor und bildet daraus den Elektrolyten.

Während des Ladevorgangs gelangen Elektronen in die obere Magnesium-Elektrodenschicht. Gleichzeitig bilden sich positiv geladene Mg-lonen unter Abgabe von Elektronen aus der Magnesium-Antimon-Legierung der unteren Elektrodenschicht und wandern durch den Elektrolyten ebenfalls zur oberen Magnesiumschicht, wo sie unter Aufnahme eines Elektrons metallisches Magnesium bilden. Umgekehrt werden während der Entladung Elektronen an der oberen Elektrode abgegriffen, so wandern die dann wieder positiv geladenen Mg-lonen von der oberen Magnesium-Elektrodenschicht durch den Elektrolyten in die untere Schicht zurück.

Eine solche Akkuzelle soll für Stromdichten von bis zu 200 mA/cm² geeignet sein. Die Spannungen dieses Batterietyps liegen generell deutlich unter 1 V."

Eine weitere interessante Alternative sind die Metall-Luft-Batterien. Als Metall-Luft-Batterien werden grundsätzlich solche Batterien bezeichnet, bei denen entweder (i) Luft durch einen entsprechenden lonenleiter transportiert wird und dort mit einem festen Material (Aktivmaterial) reagiert oder (ii) das feste Material (Aktivmaterial) zunächst ionisiert und in den Elektrolyten überführt wird, von dort zur Gegenelektrode transportiert und dort in einem Sauerstoff haltigen Medium oxidiert wird.

Beispiele für die unter (i) genannte Ausführungsform sind beispielsweise in den Patentanmeldungen US 2012/0328972, US 2011/0033769 A1, WO 96/23322 und WO 2013/093 044 A1 beschrieben.

Bei manchen Lithium-Batterien dient metallisches Lithium als Anode. Es nimmt grundsätzlich vollständig an der elektrochemischen Reaktion teil. Problematisch ist das Wachstum von Lithium-Metall beim Laden: es wächst nicht als ebene Schicht, sondern in einer Art gerichtetem Netzwerk, dem sogenannten Dendriten-Wachstum. Diese nadelartigen Strukturen können unerwünschte Kurzschlüsse in einer Batteriezelle hervorrufen.

Ein bekanntes Beispiel für Lithium-Metall-haltige Batterien ist beispielsweise der Lithium-Luft-Akkumulator. Neuere Forschungen beschäftigen sich auch mit dem Ersatz von Lithium durch Natrium oder Zink.

Ein Problem bei den Metall-Luft-Batterien gemäß (i) besteht darin, die Sauerstoff-Ionen geeignet an das Metall als Aktivmaterial heranzuführen und zu vermeiden, dass die Volumenzunahme des Metalls bei der Oxidation die Batterie schädigt bzw. dass sich nicht elektrisch leitende Phasen ausbilden, die die weitere gewünschte Reaktion erheblich verlangsamen.

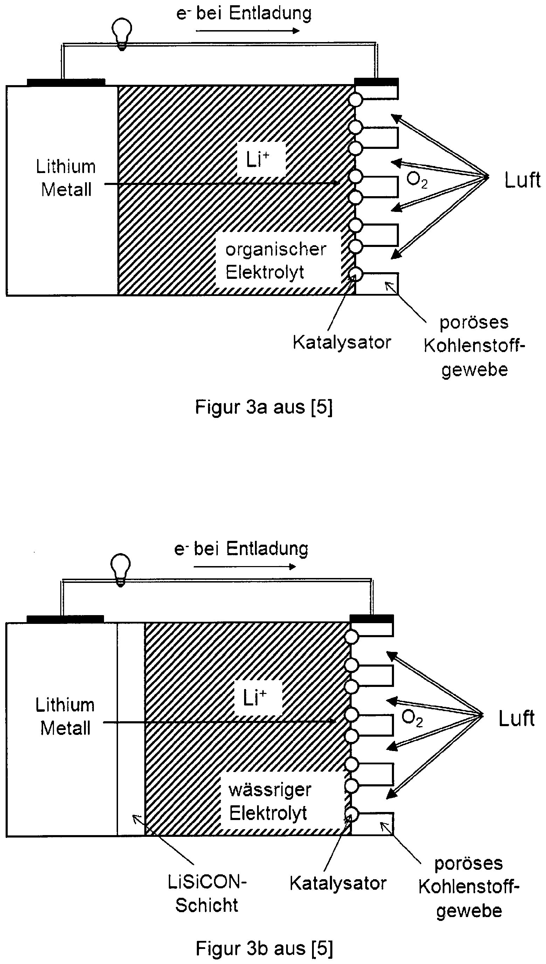

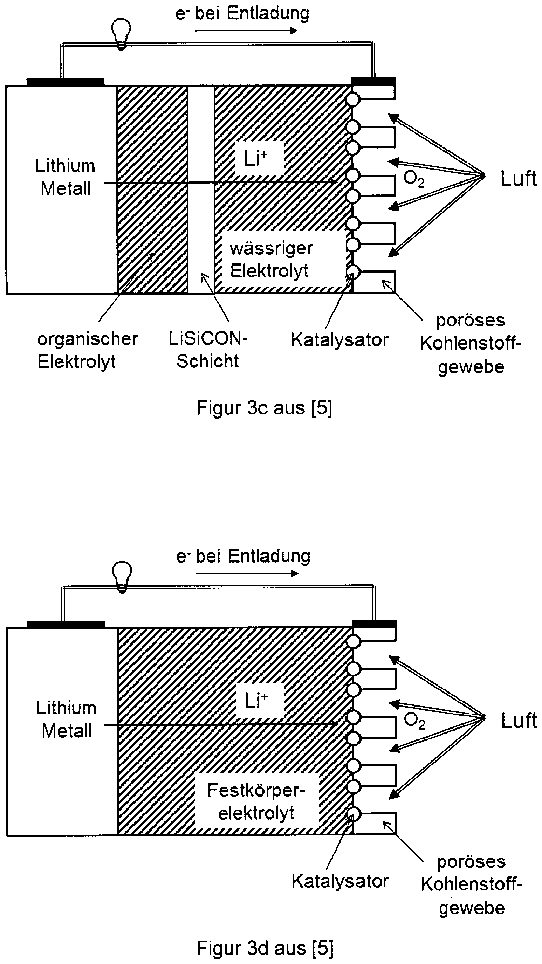

In den Figuren 3a bis 3d (entnommen aus [5]) ist dargestellt, dass es für Li-Luft-Batterien bezogen auf die Ausgestaltung des Elektrolyten allein vier unterschiedliche Variationen gibt: mit einem nichtwässrigen Elektrolyten, mit einem wässrigen Elektrolyten, mit einem Hybrid-Elektrolyten und mit einem Feststoff-Elektrolyten. Allen Ausgestaltungen gemein ist, dass festes Lithiummetall als Anodenmaterial und Sauerstoff als Oxidationsmittel an der Kathode eingesetzt werden, wie aus der Figur 3 ersichtlich. LiSICON steht dabei für Li super-ionic conductor.

Bei den Metall-Luft-Batterien gemäß (ii) kann das Problem auftauchen, dass das komplette Aktivmaterial, in der Regel Metall, zunächst erst ionisiert werden und im Anschluss komplett durch den Elektrolyten bewegt werden muss. Anstelle des Aktivmaterials entsteht insofern ein leerer Raum im verbleibenden Metallgitter, der beim erneuten Laden wieder entsprechend gefüllt werden muss. Es können sich zudem an dieser Stelle Probleme mit dem elektrischen Kontakt des Materials zum Stromabgriff und zum Elektrolyten ergeben. Es ist nicht auszuschließen, dass das beim Laden erneut abgeschiedene Metall zwar an der davor vorgesehen Stelle, jedoch in einer anderen Form, beispielsweise in Dendriten aufwächst, anstelle in Form einer kompakten Schicht. Darüber hinaus darf sich an der Gegenelektrode eine thermodynamisch nicht zu stabile Phase bilden, da sich eine solche nachteilig bei einer Rückreaktion häufig nicht mehr reversibel verhält. Bei einem Lithium-Luft-Systemen wäre beispielsweise Lithium- Peroxid eine geeignete Phase, während im Gegensatz dazu Li₂O ein Beispiel für eine sehr stabile Phase darstellt.

Eine weitere Metall-Luft-Batterie wird in HAHN S K ET AL: "Thermodynamic investigation of antimony + oxygen and bismuth + oxygen using solidstate electrochemical techniques", JOURNAL OF CHEMICAL THERMODYNAMICS, ACADEMIC PRESS, LONDON, GB, Bd. 11, Nr. 7, 1. Juli 1979 (1979-07-01) beschrieben.

Wiederaufladbare Lithium-Ionen-Batterien haben in den letzten Jahren einen Siegeszug angetreten. Man findet sie bereits in vielen mobilen Geräten vor. Ihr Einsatzgebiet liegt neben Hybrid- und Elektrofahrzeugen auch in der möglichen Speicherung des Stroms aus Wind- oder Solarenergieanlagen. Einigen Anforderungen können diese Batterien jedoch noch nicht genügen, speziell mit Blick auf die Energie-Speicherdichte, weshalb viele Anstrengungen unternommen werden, alternative Speichermaterialien zu erforschen. Die gegenwärtig verwendeten organischen Elektrolyte sind chemisch bzw. thermisch nicht stabil und reagieren auch heftig mit Wasser oder Sauerstoff.

Im Zusammenhang mit Batterien oder Akkumulatoren wird unter der Kapazität meist die maximale Ladungsmenge verstanden, die in ihnen gespeichert werden kann. Sie wird häufig als Produkt aus elektrischem Strom und Zeit angegeben (z. B. in Ah). Als Energie wird im Rahmen der Erfindung das Produkt aus elektrischer Spannung (Einheit Volt) und Ladungsmenge (Einheit z. B. Amperestunden) verstanden, wobei diese zusätzlich auch in Form Energiedichte bezogen auf die Masse bzw. das Volumen der Batterie ausgedrückt werden kann. Als Einheit der Energiedichte wird daher Wattstunden pro Kilogramm (bei Bezug auf die Masse) bzw. Wattstunden pro Kubikmeter (bei Bezug auf das Volumen) verwendet.

### Aufgabe und Lösung

Die Aufgabe der Erfindung ist es, einen wiederaufladbaren Energiespeicher, im Folgenden Batterie genannt, zur Verfügung zu stellen, der größere Mengen an elektrischer Energie kostengünstig speichern kann, eine ausreichende Kapazität bzw. Energie aufweist, zu großen Größen skalierbar und möglichst einfach in der Herstellung und der Handhabung ist. Zudem sollte er viele Lade- und Entladezyklen ohne Schaden überstehen und eine lange Lebensdauer aufweisen.

Die Aufgabe der Erfindung wird gelöst durch einen elektrochemischen Energiespeicher mit den Merkmalen des Hauptanspruchs, sowie durch mehrere Verfahren zum Betreiben eines solchen Energiespeichers gemäß der nebengeordneten Ansprüche.

Vorteilhafte Ausgestaltungen sowohl des Energiespeichers als auch der Verfahren zum Betreiben eines solchen Energiespeichers finden sich in den jeweils darauf rückbezogenen Ansprüchen.

### Gegenstand der Erfindung

Der erfindungsgemäße wiederaufladbare Energiespeicher, basiert auf einer Metall-Luft-Batterie, bei der eine Gaselektrode eingesetzt wird und eine Ionen bzw. Protonen leitende Membran als Elektrolyt verwendet wird, ähnlich wie es in Figur 3d als Stand der Technik dargestellt ist. Die Funktion der Gaselektrode ist es, mit Gasmolekülen aus dem Gasraum so zu reagieren, dass aus dem Gas Ionen (bzw. in einem Ausführungs-Fall Protonen) entstehen, die dann durch den Elektrolyten geleitet werden. Wegen der Notwendigkeit des Ladungsflusses bei der Reaktion muss die Gaselektrode elektrisch leitfähig sein. Analog verhält es sich mit der Rückreaktion bei einer reversibel arbeitenden Batterie: Die Ionen (bzw. Protonen) aus dem Elektrolyten werden an der Gaselektrode unter elektrischer Ladungsaufnahme bzw. Abgabe elektrochemisch zu neutralen Gas-Teilchen umgesetzt, die in den Gasraum abgegeben werden. Die Gaselektrode wird dabei generell nicht chemisch umgesetzt.

Im Unterschied zu den bekannten Metall-Luft-Batterien liegt bei dem erfindungsgemäßen Energiespeicher, die Aktivkomponente auf der der Gaselektrode gegenüberliegenden Seite der Elektrolytmembran in Form eines flüssigen Mediums vor. Es gibt grundsätzlich zwei Ausführungsformen:
(i) Das flüssige Aktivmaterial hat direkten Kontakt zum festen Elektrolyten. In diesem Fall speichert das Aktivmaterial nicht nur die geladenen Teilchen aus dem Elektrolyten, sondern vollzieht auch die elektrochemische Teil-Reaktion mit dem notwendigen Ladungsfluss.
(ii) Das flüssige Aktivmaterial steht über eine feste Katalysatorschicht auf dem Elektrolyten mit demselben in Kontakt. Im Extremfall übernimmt diese Katalysatorschicht nicht nur eine Beschleunigung der Teilreaktion, sondern die komplette Elektrodenteilreaktion mit zugehöriger Ladungsaufnahme bzw. -abgabe ähnlich wie oben bei der Gaselektrode beschrieben, und das flüssige Aktivmaterial nimmt dabei das Teilreaktionsprodukt (aus den Teilchen aus dem Elektrolyten) auf. Das Aktivmaterial muss in diesem Fall nicht mehr zwingend elektrisch leitend sein.

Im ersten Fall wird das flüssige Aktivmaterial, im zweiten Fall das Ensemble aus Katalysatorschicht (stets fest) und flüssigem Aktivmaterial im Folgenden als Gegenelektrode bezeichnet.

Diese flüssige Aktivkomponente kann vollständig an der elektrochemischen Reaktion teilnehmen. Das Aktivmaterial kann wenigstens in einer reduzierten und einer oxidierten Form (Redoxpaar) vorliegen. Dabei sind prinzipiell zwei Betriebsweisen zu unterscheiden.
(i) Das an der Gaselektrode vorliegende Gas bzw. Bestandteile bzw. Ionen davon wirken oxidierend (z. B. Sauerstoff): Während der Ladung des Energiespeichers wird zumindest ein Teil des in einer reduzierten Form vorliegenden, flüssigen Aktivmaterials (z. B. ein Metall) in eine oxidierte Form (z. B. ein Metalloxid), überführt, welche ebenfalls flüssig vorliegen kann. Gleichzeitig wird das für die Reaktion benötigte Oxidationsmittel (z. B. Luft) aus dem Gasraum an der Gaselektrode entnommen.
(ii) Das an der Gaselektrode vorliegende Gas bzw. Bestandteile bzw. Ionen davon wirken reduzierend: Während der Ladung des Energiespeichers wird das in oxidierter Form vorliegende, flüssige Aktivmaterial in eine reduzierte Form, welche ebenfalls flüssig vorliegen kann, überführt, während das für die Reaktion benötigte Reduktionsmittel aus dem Gasraum an der Gaselektrode entnommen wird.
Im Folgenden wird der erfindungsgemäße reversible Energiespeicher auch Flüssigmedium-Gas-Batterie genannt.

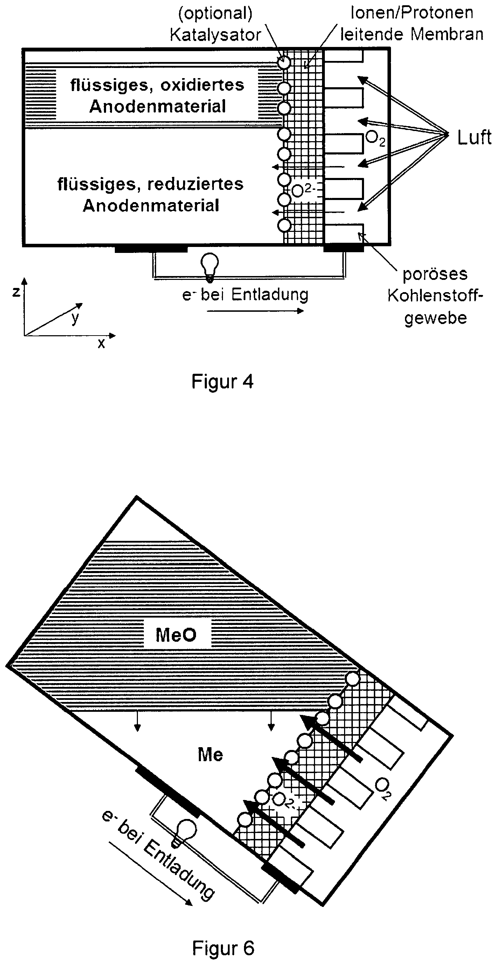

Die Figur 4 zeigt eine Ausführungsform der erfindungsgemäßen Flüssigmedium-Gas-Batterie, bei der Luft, insbesondere Sauerstoff, als Gas eingesetzt wird.

Der große Vorteil der erfindungsgemäßen Flüssigmedium-Gas-Batterie liegt darin, dass sich das flüssige Aktivmaterial bei jedem Lade- oder Entladezyklus, das heißt bei jeder Reduktion bzw. Oxidation auf Grund seiner flüssigen Form aufs Neue organisieren bzw. strukturieren kann. Die unterschiedlichen spezifischen Dichten von reduziert und oxidiert vorliegendem Aktivmaterial führen vorteilhaft zu einer Schichtung innerhalb des Gehäuses.

Die bislang schädlichen Volumenzunahmen eines festen Elektrodenmaterials bei der Oxidation oder die Ausbildung von nicht elektrisch leitenden Phasen, die die weiteren, gewünschten Redoxreaktion erheblich verlangsamen, können so vorteilhaft vermieden werden.

Die erfindungsgemäße Ausführung der Flüssigmedium-Gas-Batterie weist ein Behältnis auf, welches bei der Betriebstemperatur der Batterie ein Medium in flüssiger Form als Aktivmaterial umfasst. Als ein solches Material sind unter anderem geeignet: Metalle, Halbmetalle, Sauerstoff-haltige Verbindungen inkl. einfacher oder komplexer Oxide, Stickstoff-haltige Verbindungen (inkl. Nitrate, Nitride), Kohlenstoff-haltige Verbindungen (inkl. Karbide, Karbonate), Wasserstoff-haltige Verbindungen (inkl. Hydride), Phosphorhaltige Verbindungen (inkl. Phosphide, Phosphate), Halogen-haltige Verbindungen (Halogene definiert als Elemente der siebten Hauptgruppe des Periodensystems der Elemente), andere Chalkogen-haltige Verbindungen (Chalkogene definiert als Elemente der sechsten Hauptgruppe des Periodensystems der Elemente) inkl. Sulfide, Sulfate, Silizium-haltige Verbindungen inkl. Silikate, Germanium-haltige Verbindungen oder Bor-Verbindungen, insbesondere mit einem oder mehreren Metallen oder Halbmetallen (bezogen auf die gesamte Liste von den Oxiden bis zu den Borverbindungen), oder Mischungen davon, sofern sie bei Betriebstemperaturen in flüssiger Form vorliegen.

Die Betriebstemperaturen der erfindungsgemäßen Flüssigmedium-Gas-Batterie liegen abhängig vom eingesetzten Aktivmaterial und Elektrolyten zwischen 500 und 1000 °C.

Das Aufheizen auf die erforderliche Betriebstemperatur der Flüssigmedium-Gas-Batterie kann dabei konventionell, d. h. durch ein externes Mittel, wie beispielsweise eine Heizung oder eine sonstige Wärmequelle erfolgen.

Vorteilhaft weist das Aktivmaterial ein Metall oder eine Mischung von Metallen (inkl. Legierungen) auf und ferner zusätzliche Stoffe, die beispielsweise durch Bildung von Eutektika, den Schmelzpunkt des Reaktionsprodukts, d. h. des oxidiert vorliegenden Aktivmaterials, absenken. Analog dazu können im Fall von Gläsern als Aktivmaterial ebenfalls weitere Stoffe zugesetzt sein, die den Erweichungspunkt erniedrigen.

Beim Betrieb der erfindungsgemäßen Flüssigmedium-Gas-Batterie soll das Aktivmaterial im Normalfall vor der Reaktion mit den Ionen aus dem Elektrolyten flüssig sein. Dieses Aktivmaterial muss in der Lage sein, mit den Ionen bzw. Protonen, die aus dem Elektrolyten kommen, (elektro-) chemisch reagieren zu können. Vorteilhaft für den Betrieb der Batterie ist eine hohe Beweglichkeit von Elektronen und/ oder Ionen in dem flüssigen Aktivmaterial, bzw. eine hohe Leitfähigkeit für Elektronen und Ionen. Dadurch wird der Innenwiderstand der Batterie vorteilhaft minimiert.

Weiterhin vorteilhaft ist eine möglichst geringer Adhäsion bzw. möglichst großem Benetzungswinkel zwischen der Membran und den flüssigen Phasen des Aktivmaterials, da sich diese im Betrieb möglichst gut von der Membran lösen und sich räumlich entfernen sollen.

Grundsätzlich kann der Energiespeicher als ein geschlossenes Behältnis ausgestaltet sein, von zum Teil notwendigen Nebenaggregaten, wie z. B. einer Druck- bzw. Volumenausgleichsvorrichtung auf der Gas- und/oder der Gegenelektrodenseite oder Stromdurchführungen abgesehen.

Das Behältnis ist im Regelfall vollständig mit Aktivmaterial gefüllt. Vollständig bedeutet im Rahmen dieser Erfindung, dass dabei mögliche Volumenänderungen durch die Oxidation bzw. Reduktion des Aktivmaterials komplett berücksichtigt werden. Bei maximalem Volumen des Anodenmaterials soll kein Druck im Behälter entstehen. Bei Übergang des Anodenmaterials mit höherem Volumen zu dem mit geringerem Volumen entstehen entsprechend Hohlräume.

Das Behältnis der Flüssigmedium-Gas-Batterie besteht aus einem Material, welches dauerhaft von dem flüssigen Aktivmaterial oder entsprechenden Reaktionsprodukten, die ebenfalls flüssig sein können, nicht korrosiv angegriffen wird. Zudem ist es auch bei den erforderlichen Betriebstemperaturen der Flüssigmedium-Gas-Batterie, d. h. bis ca. 1000 °C stabil. Ein geeignetes Behältnismaterial ist beispielsweise Zirkoniumoxid.

Weiterhin umfasst das Behältnis zusätzlich eine Ionen bzw. Protonen leitende Membran als Elektrolyt, beispielsweise einen Festkörper-Ionenleiter.

Diese Membran muss ebenfalls aus einem Material sein, welches dauerhaft von dem flüssigen Aktivmaterial oder entsprechenden oxidierten Reaktionsprodukten, die ebenfalls flüssig sein können, sowie von dem im Gasraum eingesetzten Gas nicht korrosiv angegriffen wird. Auch sie muss bei den erforderlichen Betriebstemperaturen ausreichend langzeitstabil ausgestaltet sein.

Als geeignetes Material für diese Membran kann Polymer, Glas oder ein Festkörper genannt werden. Die Bezeichnung Festkörper beschreibt hier ein Material mit einer Fernordnung im Kristallgitter, d. h. in einem Röntgendiffraktrogramm sind Reflexe infolge von Interferenzen bei der Beugung der Röntgenstrahlung an den Netzebenen des Kristallgitters zu erkennen. Als Glas wird hier ganz allgemein ein Material verstanden, das nur amorph ist bzw. höchstens eine Nahordnung im Kristallgitter aufweist, d. h. in einem Röntgendiffraktrogramm sind keine Reflexe infolge von Interferenzen bei der Beugung der Röntgenstrahlung an den Netzebenen des Kristallgitters zu erkennen. Die Viskositäten liegen typischerweise oberhalb der Größenordnung von 10¹⁰ Pa*s. Insbesondere kann eine Keramik (polykristallin) oder ein Einkristall, oder eine Kombination aus wenigstens zwei der drei Materialklassen Polymer, Glas oder ein Festkörper verwendet werden. Teil-kristallisierte Keramiken, so genannte Glaskeramiken, sind ebenfalls als geeignete Materialien für den Elektrolyten mit umfasst.

In einer vorteilhaften Ausgestaltung ist der Elektrolyt ein Sauerstoffionenleiter. Beispielsweise kann der Elektrolyt ein teilsubstituiertes ZrO_{2-δ} aufweisen, substituiert mit z. B. Yttrium (Y) oder Scandium (Sc) und mit Substitutionsanteilen zwischen 0 und 16 mol-%. Vorteilhaft ist auch ein Elektrolyt aus CeO_{2-δ}, wobei optional zwischen 0 und ca. 30 mol-% auf dem Ce-Platz mit Gadolinium (Gd), Samarium (Sm), Neodymium (Nd) oder weiteren Seltenen Erden, oder mit Elementen der Zweiten Hauptgruppe des Periodensystems, z. B. Strontium (Sr) teilsubstituiert sein können.

Der Elektrolyt kann aber auch vorteilhaft als Protonenleiter auf der Basis von Lanthan-Wolframat, optional teilsubstituiert mit weiteren Seltenen Erden auf dem La-Platz ausgestaltet sein.

Das korrosionsbeständige Wandmaterial und das Material der Ionen bzw. Protonen leitenden Membran können gegebenenfalls auch identisch sein.

Die gasdichte Membran liegt als dünne Elektrolyt-Schicht vor und hat damit den Vorteil einer hohen Ionenleitung, was zu einem geringeren Innenwiderstand der Flüssig-Gas-Batterie führt. Als dünne Schichten werden in diesem Zusammenhang Schichten mit einer Schichtdicke von weniger als 500 Mikrometer, insbesondere von weniger als 10 Mikrometer verstanden.

Die Ionen bzw. Protonen leitende Membran kann durch ein Füge- bzw. Dichtungsmaterial oder mit einer Labyrinth-Dichtung in das Behältnis eingefügt oder auch nur angepresst werden. Das Behältnis kann alternativ auch komplett aus ein und demselben Material (Ionen bzw. Protonen leitendes Material) gefertigt sein und benötigt dann im Wesentlichen keine zusätzliche Dichtung.

Auf der Ionen bzw. Protonen leitenden Membran als Elektrolyt ist auf der dem Aktivmaterial zugewandten Seite vorteilhaft eine Schicht aufgetragen, die zur Verbesserung von Grenzflächenreaktionen (Katalyse/ katalytische Aktivität), insbesondere zwischen dem flüssigem Aktivmaterial und antransportierten Ionen bzw. Protonen dient. Diese Schicht wird im Folgenden Aktivmaterial-Katalysator-Schicht genannt.

Auf der anderen Seite der Ionen bzw. Protonen leitenden Membran als Elektrolyt ist eine Gaselektrode angeordnet, an die sich auf der Membran abgewandten Seite ein Gasraum anschließt, der grundsätzlich auch abgeschlossen sein kann, abgesehen von zum Teil notwendigen Nebenaggregaten wie z. B. eine Gaszufuhr- und Gasabfuhrmöglichkeit und notwendige Stromdurchführungen (siehe Figur 4). Die Gaselektrode bzw. der Gasraum können sowohl mit einem oxidierenden, als auch mit einem reduzierenden Gas beaufschlagt bzw. betrieben werden.

Die Gaselektrode kann dabei vorteilhaft als Schicht, die das zur elektrochemischen Reaktion vorgesehene Gas aus dem Gasraum oder Bestandteile davon in Ionen überführt, auf der Membran aufgebracht sein. Diese Schicht, die das Gas oder Bestandteile davon in Ionen überführt, kann dicht oder aber auch porös sein. Diese Schicht ist elektrisch leitfähig.

Als Gas für die Gaselektrode des erfindungsgemäßen Energiespeichers kann besonders vorteilhaft Luft als Sauerstoffträger eingesetzt werden. Weitere geeignete Gase sind Gase, die allgemein Sauerstoff, Stickstoff, Wasser, Wasserstoff, Kohlendioxid, Kohlenmonoxid oder Halogene (Elemente der siebten Hauptgruppe des Periodensystems der chemischen Elemente) enthalten, oder auch Mischungen dieser Stoffe aufweisen, und die entweder als Oxidationsmittel oder als Reduktionsmittel verwendet werden.

In einer vorteilhaften Ausgestaltung der Erfindung ist benachbart zur Gaselektrodenschicht zusätzlich ein gasdurchlässiger Träger angeordnet, der für die mechanische Stabilität sorgt. Der Träger kann dabei aus demselben Material bestehen wie die Gaselektrode.

Das Grundprinzip der erfindungsgemäßen Batterie beruht auf dem unterschiedlichen chemischen Potential zwischen dem flüssigen Aktivmaterial in seiner reduzierten bzw. seiner oxidierten Form mit dem Gas oder einem Teil davon. Ein Beispiel für unterschiedliche chemische Potentiale zwischen dem reduzierten Aktivmaterial und dem oxidierten Aktivmaterial mit einem Gas ist Kupfer (Cu) als reduziert vorliegendes Aktivmaterial und Kupferoxid (Cu²⁺O²⁻) als oxidiert vorliegendes Aktivmaterial mit Sauerstoff:
Cu -> Cu²⁺ + 2e⁻ , zugehörige elektrische Spannung -0,34 Volt. [1]

Die gesamte Reaktion in der Batterie verläuft bei der Entladung dabei wie folgt.

Voraussetzung ist, dass das an der Gaselektrode vorliegende Gas und das flüssige Aktivmaterial ein anderes chemisches Potential aufweisen als das Reaktionsprodukt. Beispielsweise wird Sauerstoff in einer Metall-Luft-Batterie, an der katalytisch wirkenden Gaselektrode zumindest zu einem Teil chemisch so umgesetzt, dass geladene Teilchen entstehen und diese dann infolge der Triebkraft durch das chemische Potentialgefälle durch die Ionen- leitende Membran zum flüssigen Medium, hier konkret zum Metall, diffundieren. Dort reagieren sie mit dem flüssigen Metall und bilden als Reaktionsprodukt eine zweite Phase, ein Metalloxid, die ebenfalls flüssig sein kann.

Verläuft die Reaktion an der Grenzfläche zwischen dem flüssigen Aktivmaterial und dem Elektrolyten/Membran langsamer als gewünscht, kann optional eine zusätzliche Katalysator-Schicht zwischen dem Aktivmaterial und der Ionen bzw. Protonen leitenden Membran aufgetragen werden. In dem Fall, dass der Katalysator nicht nur chemisch wirkt, sondern der Katalysator zumindest teilweise zudem auch die Funktion einer Elektrode übernimmt (d. h. Elektronen aufnimmt bzw. abgibt), sollte der Katalysator auch Elektronen leitend ausgestaltet sein. Vorteilhaft bringt man in diesem Fall einen Stromabgriff für den späteren Stromtransport durch einen externen Stromkreis direkt an der Katalysator-Schicht an.

Die elektrische Ladung für den benötigten Ladungsaustausch im Gasraum an der Gaselektrode fließt über die Gaselektrode und einen Stromabgriff daran, bzw. über einen elektrischen Leiter, der elektrischen Kontakt zu dem flüssigen Medium hat. Die Gaselektrode muss entsprechend elektrisch leitend ausgestaltet sein. Gaselektroden aus Hochtemperatur-Brennstoffzellen, die ähnlich konzipiert sind wie in dieser Erfindung, haben Material-Leitfähigkeiten im Bereich von über 100 Siemens pro cm oder, anders ausgedrückt, maximal 0,01 Ohm·cm an elektrischem Widerstand.

Flüssige Metalle sind grundsätzlich sehr gute elektrische Leiter, und auch Salzschmelzen haben häufig auf Grund der lonenbewegung eine ausreichend gute elektrische Leitfähigkeit, um eine Stromabführung durch sie zu gewährleisten. Maximal tolerable spezifische Widerstände zur Minimierung der Ohmschen Verluste hängen sehr von der tatsächlichen Auslegung des Behältnisses ab. Geht man im einfachsten Fall von einem Kubus als Aktivmaterial aus und erlaubt man maximal 1 % Spannungsverlust im Vergleich zur Nennspannung, so ergibt sich ein maximaler spezifischer Widerstand von der Größenordnung 10⁻³ Ohm·cm. Zur Stromabführung eignet sich im Fall von flüssigen Aktivmaterialien, die auch im festen Zustand eine hinreichende elektrische Leitfähigkeit aufweisen, in einer besonders einfachen Ausgestaltung der Erfindung ein Rohr, welches mit demselben flüssigen Aktivmaterial gefüllt ist wie das Behältnis. Das Rohr mit dem flüssigen Aktivmaterial wird nach außen geführt und auf eine Temperatur, die deutlich niedriger als der Schmelzpunkt des flüssigen Mediums ist und damit auch unterhalb der Betriebstemperatur liegt, gebracht. Auf diese Weise kann ein Energieverbraucher an einen festen elektrischen Leiter kontaktiert werden. Damit kann man vorteilhaft Korrosionserscheinungen am Stromabgriff, insbesondere an der Grenzfläche Stromabgriff- flüssiges Medium minimieren.

Die Stromabführung kann alternativ oder ergänzend dazu auch über die elektrochemisch wirkende Katalysator-Schicht erfolgen, die benachbart zur Ionen leitenden Membran angeordnet ist. Bei dieser Ausgestaltung kann man als Stromabgriff als Material auch das Katalysatormaterial verwenden, um unerwünschte Reaktionen zu minimieren.

Eine Besonderheit des erfindungsgemäßen Energiespeichers ist es, dass diese Art von Batterie auf Grund der Bauart und der Beschaffenheit des flüssigen Aktivmaterials eine Vorzugsausrichtung während des Betriebs aufweist. Insofern weisen besonderen Ausgestaltungen des Energiespeichers, wie sie nachfolgend beschrieben werden, besondere Vorteile auf.

Legt man beispielsweise fest, dass die Anordnung des Elektrolyten und der negativen Gaselektrode innerhalb des Gehäuses in einer vorteilhaften Ausgestaltung der Erfindung in der y-z-Ebene erfolgt (siehe Figur 4), so bedeutet das, dass der Elektrolyt bei dem erfindungsgemäßen Energiespeicher dann senkrecht zur Erdoberfläche angeordnet ist. Demgegenüber bildet das flüssige Aktivmaterial in reduzierter und oxidierter Form auf Grund der Schwerkraft regelmäßig horizontale Schichten so aus, dass - beginnend mit dem tiefst möglichen (d. h. erdnächsten) Punkt - sie sich möglichst in der x-y-Ebene ausdehnt.

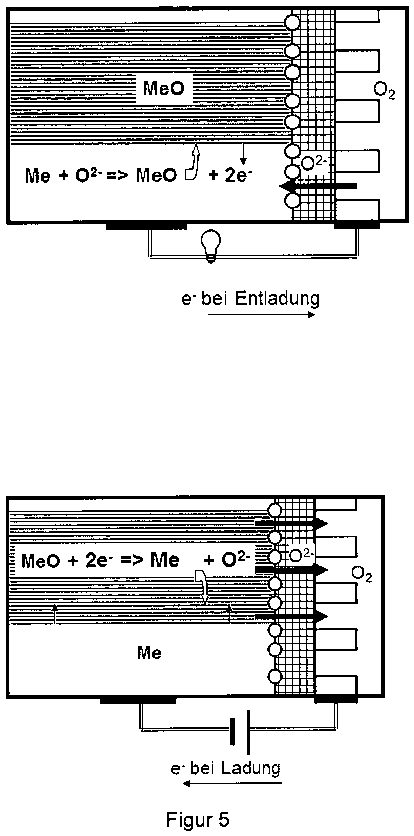

Ohne Beschränkung der Allgemeingültigkeit dieser Erfindung wird zur Erläuterung der Bedeutung der vorteilhaften Konstruktion des Energiespeichers und der dadurch erzielten räumlichen Lage der Batterie bzw. zum besseren Verständnis auf den Spezialfall Sauerstoff als Oxidationsmittel und Metall als flüssiges, reduziert vorliegendes Aktivmaterial zurückgegriffen, so wie in Figur 5 dargestellt. Das flüssige Aktivmaterial bildet auf Grund der Schwerkraft regelmäßig Schichten in der x-y-Ebene aus, wobei die Dichte des reduziert vorliegenden Metalls in der Regel höher ist, als die des oxidierten Aktivmaterials, in diesem Fall eines Metalloxids. Das flüssige Metall wird sich also in der Regel am Boden des Gehäuses sammeln.

Eine solche vorteilhafte Anordnung des erfindungsgemäßen Energiespeichers führt bei einem Entladezyklus vorteilhaft dazu, dass die durch die Membran wandernden negativen Teilchen zumindest immer auch direkten Kontakt zum flüssig vorliegenden Aktivmaterial haben, unabhängig, wie weit der Entladeprozess schon fortgeschritten ist. Während des Entladevorgangs nimmt das Volumen an reduziert vorliegendem Aktivmaterial (angedeutet durch kleinen Pfeil in Figur 5) ab und damit auch die Kontaktfläche dieser Phase zur Membran. Die Oxidation des Aktivmaterials kann dennoch zu jedem Zeitpunkt unmittelbar stattfinden, und wird nicht nachteilig durch eine Schicht aus bereits oxidiert vorliegendem Aktivmaterial gehemmt.

Auf der anderen Seite führt diese erfindungsgemäße Anordnung aber auch bei dem Ladezyklus (siehe Figur 5 rechts) vorteilhaft dazu, dass die bei der Reaktion des Aktivmaterials freiwerden Teilchen zumindest immer auch direkten Kontakt zum Elektrolyten haben, unabhängig, wie weit der Ladeprozess schon fortgeschritten ist. Während des Ladevorgangs nimmt das Volumen an oxidiert vorliegendem Anodenmaterial (angedeutet durch kleinen Pfeil in Figur 5) ab und damit auch die Kontaktfläche dieser Phase zur Membran.

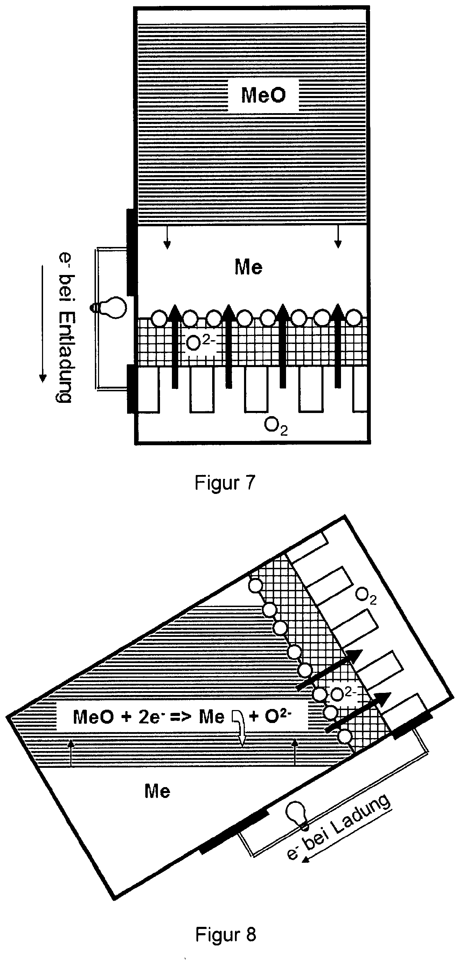

Durch eine Änderung des Gehäuses im 3-dimensionalen Raum (siehe Figuren 6 bis 8), z,B. eine Drehung, kann beispielsweise der Vorgang des Entladens vorteilhaft dadurch unterstützt werden, dass die Batterie in der x-z-Ebene gedreht wird, und zwar derart, dass die Kontaktfläche zwischen dem Elektrolyten (Membran) und dem reduziert vorliegenden Aktivmaterial maximiert wird. Im Extremfall kann die Batterie dabei um 90° in der x-z-Ebene gedreht werden, was bedeutet, dass sich die Gaselektrode und der Elektrolyt sozusagen am Boden befinden, und sich die Schicht aus flüssigem Aktivmaterial direkt darüber befindet. Das während des Ladeprozesses gebildete, leichtere oxidierte Aktivmaterial steigt vorteilhaft nach der Bildung direkt nach oben und bildet auf dem reduziert vorliegenden Aktivmaterial eine zweite Schicht aus. Dadurch befindet sich während des gesamten Entladevorgangs vorteilhaft an der gesamten Grenzfläche zur Membran immer nur reduziert vorliegendes Aktivmaterial. Gegebenenfalls muss bei dieser Ausgestaltung darauf geachtet werden, dass der Stromabnehmer an der Anode nahe an dem Elektrolyten angeordnet ist.

Auf der anderen Seite kann eine Änderung der Anordnung des Gehäuses im 3-dimensionalen Raum auch den Vorgang des Ladens vorteilhaft dadurch unterstützten, dass die Batterie in der x-z-Ebene derart gedreht wird, dass nunmehr die Kontaktfläche zwischen dem Elektrolyten (Membran) und dem oxidiert vorliegenden Aktivmaterial maximiert wird. In dieser Ausgestaltung wäre es von Vorteil, wenn der Stromabnehmer bei der flüssigen Phase eher weit weg vom Elektrolyten angeordnet ist.

Um die Vorteile der Lageänderung der Batterie sowohl für den Lade- als auch für den Entladeprozess optimal auszuschöpfen, könnte in einer besonderen Ausgestaltung der Batterie eine variable oder entsprechend großflächige Stromabnahme für die Gegenelektrode vorgesehen sein.

Für die Fälle, in denen anstelle eines Oxidationsmittels ein reduzierendes Gas, wie beispielsweise Wasserstoff, eingesetzt wird, laufen die vorgenannten chemischen Reaktionen an der Gaselektrode und der Gegenelektrode beim Lade- und Entladevorgang mit umgekehrtem Vorzeichen für den Stromfluss ab.

Aus Sicherheitsgründen kann die erfindungsgemäße Flüssigmedium-Gas-Batterie in einem mit einem inerten Gas (Schutzgas) gefüllten Gehäuse oder in einem evakuierten Gehäuse (Vakuum) betrieben werden. Inert bedeutet hier, dass weder das flüssige Aktivmaterial noch das Gas aus dem Gasraum (für die Reaktion) mit dem Schutzgas reagiert. Bei Leckagen wird einerseits die Zufuhr des Gases, welches zur chemischen Reaktion benötigt wird, unterbrochen, andererseits gibt es aufgrund des inerten Gases, bzw. Vakuums keine Reaktionspartner für das flüssige Aktivmaterial bzw. für das zur Reaktion vorgesehene Gas.

Zusammenfassend lassen sich die Vorteile der erfindungsgemäßen Flüssigmedium-Gas-Batterie als reversiblem Energiespeicher wie folgt aufführen:
- Der Aufbau besteht aus wenigen, relativ einfach auch in größeren Größen herzustellenden Komponenten.
- Für das Ensemble aus Membran und flüssigem Aktivmaterial kann auf eine große Zahl von potentiell geeigneten Materialien zurückgegriffen werden, um allen Anforderungen an Leitfähigkeit, Schmelzpunkt bzw. Erweichungspunkt, Dichte, Viskosität und Korrosionseigenschaft gerecht zu werden. Je nach Membran und flüssigem Aktivmaterial wird die Batterie bei normaler Umgebungstemperatur oder bei höheren Temperaturen von bis zu mehreren hundert Grad Celsius betrieben.
- Der Aufbau der Batterie bewirkt, dass der Elektrolyt zu jedem Zeitpunkt Kontakt sowohl zur oxidierten als auch zur reduzierten Form des Aktivmaterials hat.
- Der besondere Aufbau der Batterie ermöglicht es weiterhin, dass durch Lageveränderung der Batterie der Lade- bzw. Entladeprozess vorteilhaft unterstützt werden kann.
- Die Komponenten der Batterie können grundsätzlich einfach wieder voneinander getrennt werden. Damit eignet sich die Batterie vorteilhaft für das Recycling.
- Der Energieinhalt der Batterie kann - abgesehen von Korrosionserscheinungen mit den Wänden - nur durch eine Leckage, also mit einem Materialverlust beim flüssigen Aktivmaterial, abnehmen. Durch Auffüllen des Behältnisses steht wieder der volle anfängliche

Energieinhalt zur Verfügung. Ähnlich verhält es sich auf der Gas-Seite.
- Außer eventuellen Korrosionserscheinungen können nur Gasverluste durch Leckagen den Energieinhalt mindern. Die Erfindung schließt ausdrücklich Luft bzw. Sauerstoff als Gas mit ein. In diesem Fall sind Gasverluste, sofern sie nach außen und nicht zum flüssigen Aktivmaterial gerichtet sind, in der Regel unerheblich, so dass hier keine Kapazitätsverluste zum Tragen kommen.
- Da die Phasen des Aktivmaterials im Betriebszustand flüssig vorliegen, spielen mechanische Spannungen infolge thermisch oder chemisch bedingter Volumenänderung keine

Rolle. Es kann zu keiner Schädigung der Aktivmaterialien durch Bruch kommen.
- Da Flüssigkeiten als Aktivmaterialien und Gase verwendet werden, haben diese immer einen guten Kontakt zur ionenleitenden Membran (z. B. hydrostatischer Druck der Flüssigkeit bzw. extern vorgegebener Gasdruck des Gases).
- Vorteilhaft kann auf Pumpen für korrosive Medien, wie beispielsweise bei einer konventionellen Redox-Flow-Batterie, verzichtet werden.
- Die Aktivmaterialien können, anders als z. B. in Lithium-Ionen-Batterien, praktisch zu 100 % benutzt werden.
- Durch eine relativ einfache Gasabschaltung lässt sich in einem Fehlerfall, beispielsweise bei einem Elektrolytmembranbruch, die Reaktion stoppen.

Als Einschränkung, die bei dem erfindungsgemäßen Energiespeicher gegebenenfalls zu berücksichtigen sind, sind nur zu nennen, das Einstellen der erforderlichen Betriebstemperatur, falls das Aktivmaterial bei Raumtemperatur nicht schon flüssig vorliegt, und gegebenenfalls das Berücksichtigen der veränderlichen Ausrichtung des Energiespeichers während des Betriebs.

### Spezieller Beschreibungsteil

Nachfolgend wird die Erfindung anhand von Ausführungsbeispielen und weiteren Überlegungen näher erläutert, ohne dass dadurch eine Einschränkung der Erfindung erfolgen soll. Zudem werden einige Figuren zum besseren Verständnis hinzugezogen. Es zeigen:
- Figur 1:: Redox-Flow-Batterie (Stand der Technik), mit E1, E2 = flüssiger Elektrolyt, E = Elektroden, M = Ionen leitende Membran, P = Pumpen.

- Figur 2:: Magnesium-Antimon-Flüssigmetall-Akku (Stand der Technik).
- Figur 3:: Ausführungsformer einer Metall-Luft-Batterie (Stand der Technik, aus [5]): 3a mit einem nicht wässrigen Elektrolyten, 3b mit einem wässrigen Elektrolyten, 3c mit einem Hybrid-Elektrolyten, 3d mit einem Festkörper-Elektrolyten.
- Figur 4:: Schema der erfindungsgemäßen Flüssigmedium-Gas-Batterie mit Sauerstoff als Oxidationsmittel. Die Koordinaten im eingezeichneten kartesischen Koordinatensystem sollen hier und im Folgenden die Lage im Raum beschreiben: x und y liegen parallel zur Erdoberfläche, z senkrecht zu Erdoberfläche. Es wird angenommen, dass sich die Elektrolytmembran in der y-z-Ebene befindet.
- Figur 5:: Ausgestaltungen der erfindungsgemäßen Flüssigmedium-Gas-Batterie mit Me/MeO als Aktivmaterial und Sauerstoff als Oxidationsmittel während des Lade- und des Entladeprozesses.
- Figuren 6-8:: Ausgestaltungen der erfindungsgemäßen Flüssigmedium-Gas-Batterie mit Sauerstoff als Oxidationsmittel in unterschiedlichen vorteilhaften Raumlagen.

### 1. Ausführungsbeispiel: Herstellung einer Modell-Flüssigmedium-Sauerstoff-Batterie

Auf einem Substrat aus La_{0,65}Sr_{0,3}MnO_{3-δ} wird eine wenige Mikrometer dünne, gasdichte Elektrolytschicht aus dem Festkörper-Ionenleiter Yttrium-stabilisiertem Zirkoniumoxid (kurz: YSZ) aufgetragen. Optional könnte auf dem Substrat vor dem Aufbringen der Elektrolytschicht auch noch eine weitere Schicht, die aus einer Mischung von La_{0,65}Sr_{0,3}MnO_{3-δ} und Elektrolytmaterial besteht aufgetragen werden; sie würde vorteilhaft die Zahl der katalytisch wirkenden Reaktionszentren erhöhen. Das Substrat kann dabei über Foliengießen und Sintern oder Pressen und Sintern hergestellt werden. Das YSZ wird beispielsweise über Siebdruck und Sintern und/oder eine physikalischer Gasphasenabscheidung aufgebracht.

YSZ ist als Material aus der Brennstoffzellenforschung als Sauerstoffionenleiter, insbesondere bei Temperaturen um 800 °C, bekannt. Die Gasdichtigkeit der Elektrolytschicht bestimmt die Selbstentladungsrate mit, daher sollte die Schicht möglichst gasdicht ausgeführt werden.

In einem über Extrusion hergestellten keramischen Becher aus Zirkoniumoxid mit einem inneren Volumen von hier 0,5 Litern wird dieses Substrat mit der YSZ-Schicht über Anpressen und/oder eine Glaslotfügung gefügt, wobei die YSZ-Schicht auf die Öffnung des Bechers gerichtet ist.

Daten für Wismut als Aktivmaterial:

| | | | |
|---|---|---|---|
| Wismut (Bi) | Schmelzpunkt | 270 °C | Dichte 9,8 g/cm⁻³ |
| Wismutoxid (Bi₂O₃) | Schmelzpunkt | 817 °C | Dichte 8,9 g·cm⁻³ |

Zuvor wird der Becher mit Wismut (auch Bismut genannt, chemisches Zeichen Bi) zu etwa 80 Vol.-% gefüllt. Die Füllung bleibt regelmäßig unter 100 %, weil das Aktivmaterial bei der Oxidation an Volumen zunimmt. Vorteilhaft erfolgt die Fügung in einer Handschuhbox unter Schutzgasatmosphäre oder im Vakuum, um das Eindringen von Fremdgasen in dem gefügten Becher zu verringern bzw. ganz zu verhindern. Der Becher verfügt seitlich über eine Bohrung zum Anschluss eines Röhrchens, das später aus dem Ofen geführt wird und, ebenfalls mit Bi gefüllt als Stromabgriff dient. Beim späteren Betrieb liegt der Becher so, dass das Röhrchen nach unten herausgeführt wird. Das Röhrchen ist dabei so lang ausgeführt, dass es einen Bereich aufweist, in dem das Röhrchen (und damit auch das Bi darin) auch während des Betriebs der Batterie eine Temperatur deutlich unter dem Schmelzpunkt von Bi aufweist. Auf diese Weise hat man später immer Kontakt zum flüssigen Metall, welches eine höhere Dichte als Wismutoxid aufweist.

Ein zweiter Platindraht wird über Zusammensintern mit dem La_{0,65}Sr_{0,5}Sr_{0,3}MnO_{3-δ} oder mittels eines Leitsilberlack-Klebers am Substrat der Membran befestigt. Der gesamte Aufbau wird in einem Ofen - für diese Modellzelle in Luftatmosphäre - auf eine Temperatur von ca. 850 °C aufgeheizt. Die Batterie liegt so, dass sich die YSZ-Elektrolyt-Membran auf einer seitlichen Fläche befindet, senkrecht zum Boden. Wismut (Bi) hat eine höhere Dichte als Wismutoxid (Bi₂O₃), so dass das Metall in der Nähe des am tiefsten gelegen Bereichs des Behältnisses sammelt und zum Stromabgriff stets guter Kontakt herrscht. Die Batterie kann sich nun über einen externen Stromkreis (mit elektrischem Verbraucher) entladen, bis ein großer Teil des flüssigen Metalls oxidiert ist.

Wismutoxid (Bi₂O₃) hat einen Schmelzpunkt von ca. 817 °C und liegt unter den eingestellten Bedingungen ebenfalls flüssig vor. Es hat eine etwas geringe Dichte und wird daher tendenziell aufschwimmen. Damit kann verhindert werden, dass auf der Membran eine fest an der Membran haftende Schicht aus Wismutoxid wächst.

### Betriebsweise beim Laden

Zum Laden der erfindungsgemäßen Flüssigmedium-Gas-Batterie legt man eine elektrische Spannung an die Stromabgriffe an, das flüssige Metall überträgt die Spannung bzw. den Strom bis zum flüssigen Metalloxid, Sauerstoff-Ionen bewegen sich in Richtung und durch den Elektrolyten zur Gaselektrode und werden dort an der La_{0,65}Sr_{0,3}MnO_{3-δ} Schicht zu gasförmigem Sauerstoff umgesetzt, der von der Schicht in den Gasraum wegdiffundiert. Dass La_{0,65}Sr_{0,3}MnO_{3-δ} dies leisten kann, wurde bereits in Versuchen zur Hochtemperatur-Elektrolyse gezeigt.

Theoretische Überlegungen zum Energieinhalt, der Energie- und Leistungsdichte:
In dem Becher befinden sich ca. 400 Milliliter Wismutmetall. Bei einer Dichte von 9,8 g/cm³ entspricht dies einer Masse von ca. 3,9 Kilogramm oder bei einer Molmasse von 209 g/mol insgesamt etwa 19 Mol. Jedes Wismutatom bzw. -ion trägt drei Elementarladungen, also können etwa 3^{∗}19 Mol Elementarladungen, also etwa 56 ^{∗}96400 Coulomb, also ungefähr 5,4 Millionen Coulomb, das entspricht etwa 1500 Amperestunden (Einheit Ah) Ladung, die gespeichert werden können. Die auf das Volumen bezogene Energiedichte ist damit ca. 1500 Ah/0,7 Liter, also ca. 2100 Ah/Liter (ohne Berücksichtigung des Volumens des Ofens), die auf die Masse bezogene Energiedichte 1500 Ah/5150 g, also ca. 290 Ah/kg (ca. 1,2 Kilogramm Becher, 100 Gramm Membran, 3,9 Kilogramm Wismut). Allerdings ist die elektrische Spannung in diesem Beispiel deutlich niedriger als bei einer Lithium-Ionen-Batterie, nämlich nur etwa 0,3 bis 1 Volt. Also hat man eine Energiedichte von ca. 700 bis 2100 Wh/Liter bzw. ca. 100 bis 290 Wh/kg. Trotzdem hat man damit mindestens ebenso gute Energiedichten wie bei heutigen Lithium-Ionen-Batterien. Die Membran lehnt sich an solche, wie sie in Hochtemperatur-Brennstoffzellen verwendet werden, an. Hier erreicht man mit Kathoden aus La_{0,65}Sr_{0,3}MnO_{3-δ} Stromdichten von etwa 0,5 A/cm² aktiver Zellfläche.

Wenn man dies auf die hier vorgestellte Zelle überträgt und annimmt, dass die Polarisationsverluste an der Grenzfläche YSZ-Bi vernachlässigbar sind, erhält man bei einer aktiven Fläche von 50 cm² in diesem Beispiel maximale Ströme von ca. 25 Ampere bei etwa einem Volt, also 25 W.

### Überlegungen zur Gasdichtigkeit

Die Selbstentladung kommerzieller Akkumulatoren liegt in der Größenordnung 1-10 % pro Monat. Legt man obiges Beispiel zugrunde, kann man damit eine maximal zulässige Entlademenge pro Sekunde für diese Batterie bestimmen. Für Sauerstoff als Oxidationsmittel kann man mit den Daten, dass unter Normalbedingungen Sauerstoffgas ein Volumen von 22,4 Litern hat und vier Elektronen zur Reduktion eines Sauerstoffmoleküls nötig sind, die Entlademenge in eine Gasmenge Sauerstoff umrechnen. Für eine Selbstentladung von 1% pro Monat muss das Gefäß als gesamtes eine Leckrate von maximal 1^{∗}10⁻³ mbar^{∗}l/s für Sauerstoff aufweisen. Wird ein Teil des Behältnisses mit einem inerten Schutzgas umspült (und enthält damit kein Sauerstoff), so muss dieser bei der maximal zulässigen Gesamtleckrate für Sauerstoff nicht berücksichtigt werden.

### 2. Ausführungsbeispiel:

### Flüssigmedium-Gas-Batterie auf der Basis von Glasschmelzen

Im Vergleich zum ersten Ausführungsbeispiel wird Bi durch Natron-Kali-Kalk-Gläser ersetzt. Diese weisen Erweichungspunkte um ca. 500 °C auf. Oberhalb dieser Temperatur nimmt deren Viskosität im Allgemeinen noch weiter deutlich ab. (Flüssige) Schmelzen sind generell durch die Beweglichkeit der enthalten Ionen elektrisch leitend. Die zughörigen Alkalimetalle haben allesamt Schmelzpunkte deutlich unterhalb von 500 °C.

### 3. Ausführungsbeispiel:

Boroxid (B₂O₃) als Zusatz im flüssigen Aktivmaterial führt beispielsweise bei einem einfachen Oxid eines Metalls regelmäßig zur Absenkung des Schmelzpunkts dieses Oxids. Als konkretes Beispiel kann das das Aktivmaterial Li-Li₂O angeführt werden. Der Schmelzpunkt der Mischung liegt im Bereich von ca. 800 - 950 °C [2], das Potential von Li-Sauerstoff-Reaktionen liegt bei knapp 3 Volt. Ein weiteres Beispiel ist Na-Na₂O als Aktivmaterial. Der Schmelzpunkt der Mischung liegt im Bereich von ca. 800 - 970 °C bei ca. 55 - 90 Mol-% Gehalt an B₂O₃ bezogen auf die Reaktionspartner Na₂O und B₂O₃ [3]; Ein weiteres Beispiel ist Mn-MnO als Aktivmaterial. Der Schmelzpunkt der Mischung liegt im Bereich von ca. 800 - 970 °C bei ca. 40 - 80 mol-% Gehalt an B₂O₃ [4]. Der grundsätzliche Aufbau ist wieder wie beim ersten Ausführungsbeispiel.

Das Beispiel Bi-Bi₂O₃ gibt noch einen weiteren Hinweis für die vorteilhafte Wahl der Materialien. Bi₂O₃ hat auch als Festkörper eine intrinsische Leitfähigkeit für Sauerstoff-Ionen. Dies kann zum Beispiel für Zustände der Batterie, bei der die eigentliche Betriebstemperatur nicht erreicht ist, von Vorteil sein, z. B. als Lade/Entlade-Reserve bei niedrigeren als die eigentliche Betriebstemperatur. Auch für andere Varianten des hier vorgestellten Batterietyps kann dies vorteilhaft verwendet werden, z. B. kann bei der Variante mit Fluor als Gas ein Festelektrolyt für den Transport von Fluor-Ionen aus einem festen Werkstoff mit einer Kristallstruktur ähnlich zu Tysonite verwendet werden, und als Aktivmaterial ein niedrig erschmelzendes Fluorid ebenfalls mit Tysonite-artiger Struktur.

Als Spezialfall kann die folgende, nicht reversibel arbeitende Batterie betrachtet werden. Li-Li₂O ohne schmelzpunkterniedrigende Zusätze. Sie könnte bei deutlich niedrigeren Temperaturen betrieben werden (wie im Prinzip alle Batterietypen mit Alkali- oder Erd-AlkaliMetallen als flüssiges Medium, Schmelzpunkte zwischen ca. 65 und 840 °C). Die Kapazität würde erhöht, da keine Zusätze im Behälter des flüssigen Mediums wären, allerdings auf Kosten der Entladefähigkeit; das Oxid müsste anderweitig wieder zum Metall reduziert werden.

Betriebstemperaturen um ca. 600 °C und höher sind für hohe elektrische Leistungen von Vorteil, da keramische Ionen- bzw. Protonenleiter in der Regel ein thermisch aktiviertes Verhalten in Anlehnung an das Arrhenius-Gesetz zeigen. Unterhalb von ca. 600 °C könnte auch bei dünnen Schichten eine möglicherweise unzureichende Leitfähigkeit der Elektrolyte auftreten.

### Überlegung zu den notwendigen Viskositäten der flüssigen Medien:

Die Reaktionsprodukte sollten von der Ionen leitenden Membran vorteilhaft so schnell abtransportiert werden, dass es zu keinem Stau an Reaktionsmaterial an der Membran kommt. Da die Triebkraft zum Abtransport im vorliegenden Fall der Flüssigmedium-Gas-Batterie die unterschiedlichen Dichten der beiden Phasen des Aktivmaterials im Flüssigkeitsbehälter sind, gibt es einen mathematischen Zusammenhang zwischen Dichteunterschied und notwendiger Viskosität.

Betrachtet wird eine Modellmembran mit einer Fläche von einem Quadratzentimeter. Es soll 1 Ampere (1 A) Strom fließen. Es wird weiter angenommen, dass das flüssiges Ausgangsmedium und das Reaktionsprodukt unterschiedliche Oberflächenspannungen haben, nicht ineinander mischbar sind und auch nicht legieren etc. In dem Modell löst sich das Reaktionsprodukt dann als kleiner kugelförmiger Tropfen von der Membranoberfläche. Die Auftriebskraft ist unter Berücksichtigung des Archimedes-Prinzips F_{A} = Δρ^{∗}V^{∗}g, wobei F_{A} die Auftriebskraft, Δρ die Differenz der Dichten von flüssigem Ausgangs- bzw. Reaktionsmedium ist, V das Volumen des Tropfens, und g die Erdbeschleunigung (9,81 m/s²). Die Reibungskraft in den Medien wird hier mit einer Stokes-Reibung beschrieben: F_{R}= 6^{∗}π^{∗}r^{∗}η^{∗}v, wobei F_{R} die Stokes-Reibungskraft, r der Radius des Flüssigkeitstropfens, η die Viskosität des Mediums, in der sich der Tropfen bewegt, und v seine relative Geschwindigkeit in dem Medium ist. Ein Gleichsetzen der Kräfte ergibt den Zusammenhang zwischen Viskosität und Dichteunterschied: η = (2^{∗}Δρ^{∗}r^{2∗}g)/(9^{∗}v). Die Geschwindigkeit v geht als Parameter ein, mit dem man annimmt, wie weit sich der Tropfen von dem Ort der Entstehung entfernt hat bzw. entfernen muss, um die weitere Funktion der Batterie sicherzustellen. Als *worst* case-Szenario wird nun angenommen, dass sich der Tropfen bei einem Stromfluss von 1 A in einer Sekunde an der Membran mit den Abmessungen von 1cm ^{∗} 1cm bildet, und der Tropfen in einer Sekunde den Membranbereich vollständig räumlich verlässt, also sich 1 cm bewegt (v = 1 cm/s).

Als Beispiel mit Wismut als Aktivmaterial beträgt die Dichte von Bi 9,8 g/cm³, die von Bi₂O₃ 8,9 g/cm³. 1 A entspricht einem Ladungsfluss von 1 Coulomb in einer Sekunde. 1/3 mol Bi -> 1/3 mol Bi³⁺ + 1 mol e⁻. 1 mol Elektronen entspricht der Faraday-Konstanten F = 96400 Coulomb. Bei einer Ladung von einem Coulomb in einer Sekunde wird demnach pro Sekunde folgende Menge an Reaktionsprodukt generiert: (1/3 mol Bi)/96400 -> (1/3 mol Bi³⁺)/96400 + 1 Coulomb Elektronen. (1/3 mol Bi³⁺)/96400 reagiert mit dem Sauerstoff zu (1/6 mol Bi₂O₃)/96400, das entsprich 0,8 mg Bi₂O₃, oder 9^{∗}10⁻⁵ cm³ Bi₂O₃. Dieses Volumen entspricht einer Kugel mit einem Radius von 0,03 cm. Setzt man dies in die obige Gleichung für die Viskosität, so erhält man als Mindestviskosität in dieser Abschätzung 18 mPa^{∗}s. Bei dieser oder einer niedrigeren Viskosität kann der Tropfen sich um mindestens 1 cm von der Membran nach oben hin entfernen.

Im Allgemeinen gilt, je größer der Dichteunterschied zwischen der oxidierten und der reduzierten Phase des Aktivmaterials und je geringer die Viskositäten der beiden Phasen, desto leichter und schneller kann die Umwandlung erfolgen. Der minimale Dichteunterschied zwischen den beiden Phasen des Aktivmaterials sollte bei Betriebstemperaturen daher wenigstens 0,5 g/cm³ aufweisen. Ferner sollte die Viskosität bei Betriebstemperaturen für beide Phasen 400 mPa/s bei 30 Mikrometer Radius der Tropen des Reaktionsprodukt nicht übersteigen.

In dieser Anmeldung zitiert:
[1] Ch. Mortimer, Chemie, Thieme Verlag Stuttgart, 3. Aufl. 1980, ISBN3-13-484303-X, Seite 289.
[2] Phase Diagrams for Ceramicists, by E. M. Levin, H. F. McMurdie, F. P. Hall, The American Ceramic Society, Columbus, OH, USA, 1956, Seite 38, Abb. 12.
[3] Phase Diagrams for Ceramicists, by E. M. Levin, H. F. McMurdie, F. P. Hall, The American Ceramic Society, Columbus, OH, USA, 1956, Seite 39, Abb. 16.
[4] Phase Diagrams for Ceramicists, by E. M. Levin, H. F. McMurdie, F. P. Hall, The American Ceramic Society, Columbus, OH, USA, 1956, Seite 57, Abb. 91.
[5] Lee et al. "Metal-Air Batteries with High Energy Density: Li-Air versus Zn-Air", Advanced Energy Materials 2011, 1, Seiten 34-50

## Patentansprüche

1. Elektrochemischer Energiespeicher,
umfassend eine Gaselektrode, einen Ionen leitenden Elektrolyten und eine Gegenelektrode umfassend ein Aktivmaterial, welches bei Betriebstemperaturen zwischen 500 und 1000 °C sowohl in wenigstens einer reduzierten Form als auch in wenigstens einer oxidierten Form flüssig vorliegt, wobei der elektrochemische Energiespeicher ein Behältnis aufweist, welches das Aktivmaterial umfasst, das flüssige Aktivmaterial innerhalb des Behältnisses in Form von horizontalen Schichten vorliegt, und die Gegenelektrode ausschließlich aus dem flüssigen Aktivmaterial oder aus dem flüssigen Aktivmaterial und einer Katalysatorschicht gebildet wird,
***dadurch gekennzeichnet,***
- **dass** der Ionen leitende Elektrolyt und die Gaselektrode nur auf einer Seite des Gehäuses senkrecht zur Erdoberfläche angeordnet sind und
- **dass** der Ionen leitende Elektrolyt eine Schichtdicke von weniger als 500 µm aufweist

2. Energiespeicher nach Anspruch 1,
bei dem der Elektrolyt auf der Seite, die für den Kontakt mit dem flüssigen Aktivmaterial vorgesehen ist, eine feste Katalysatorschicht aufweist

3. Energiespeicher nach Anspruch 1 oder 2,
mit einer Ionen bzw. Protonen leitenden Membran als Elektrolyt.

4. Energiespeicher nach einem der Ansprüche 1 bis 3,
bei dem der Ionen leitende Elektrolyt eine Schichtdicke von weniger als 10 µm aufweist.

5. Energiespeicher nach einem der Ansprüche 1 bis 4,
mit einem Aktivmaterial aus der Gruppe der Metalle, Halbmetalle, einfache oder komplexe Oxide, Stickstoffverbindungen, Kohlenstoffverbindungen, Hydride, Phosphorverbindungen, Halogenverbindungen, andere Chalkogenverbindungen, Siliziumverbindungen, Germaniumverbindungen oder Bor-Verbindungen, sowie Mischungen von wenigstens zwei der Elemente dieser Gruppe.

6. Energiespeicher nach einem der Ansprüche 1 bis 5,
mit einem Aktivmaterial aus Bismut.

7. Batteriestapel umfassend wenigstens zwei der elektrochemischen Energiespeicher gemäß einem der Ansprüche 1 bis 6.

8. Verfahren zum Betreiben eines elektrochemischen Energiespeichers gemäß einem der Ansprüche 1 bis 6,
- bei dem der Energiespeicher auf Betriebstemperaturen zwischen 500 und 1000 °C aufgeheizt wird,
- bei dem der Ionen leitende Elektrolyt senkrecht zur Erdoberfläche ausgerichtet wird,
- bei dem aufgrund eines Dichteunterschieds zwischen der Phase aus flüssigem, oxidiertem Aktivmaterial und flüssigem, reduziert vorliegendem Aktivmaterial, eine Schichtung der beiden Phasen entlang des Ionen leitenden Elektrolyten erfolgt, und
- bei dem die Reduktion oder Oxidation des Aktivmaterials ausschließlich an dem Ionen leitenden Elektrolyten oder an einer auf dem Ionen leitenden Elektrolyten angeordneten festen Katalysatorschicht erfolgt,
***dadurch gekennzeichnet, dass***
- eine Lageveränderung des Energiespeichers im 3-dimensionalen Raum erfolgt,
- sodass bei einem Ladezyklus die Kontaktfläche zwischen dem Elektrolyten und dem oxidiert vorliegenden Aktivmaterial maximiert wird und/oder
- dass bei einem Entladezyklus die Kontaktfläche zwischen dem Elektrolyt und dem reduziert vorliegenden Aktivmaterial maximiert wird.

9. Verfahren nach Anspruch 8,
bei dem Sauerstoff, als Oxidationsmittel eingesetzt wird.

10. Verfahren nach Anspruch 8 bis 9,
bei dem eine Anionen leitende Membran als Elektrolyt eingesetzt wird.

11. Verfahren nach Anspruch 8 bis 10,
bei dem Wasserstoff als Reduktionsmittel eingesetzt wird.

12. Verfahren nach Anspruch 8 bis 11,
bei dem eine Kationen, bzw. Protonen leitende Membran als Elektrolyt eingesetzt wird.

13. Verfahren nach einem der Ansprüche 8 bis 12,
bei dem ein Aktivmaterial aus der Gruppe (Metalle, Halbmetalle, einfache oder komplexe Oxide, Stickstoffverbindungen, Kohlenstoffverbindungen, Hydride, Phosphorverbindungen, Halogenverbindungen, andere Chalkogenverbindungen, Siliziumverbindungen, Germaniumverbindungen oder Bor-Verbindungen) sowie Mischungen von wenigstens zwei der Elemente dieser Gruppe oder Wismut eingesetzt wird.

14. Verfahren nach einem der Ansprüche 8 bis 13,
bei dem die chemische Umsetzung an der Gegenelektrode mit dem flüssigen Aktivmaterial durch eine auf dem Elektrolyten aufgebrachte zusätzliche Katalysatorschicht unterstützt wird.

## Claims

1. Electrochemical energy store,
comprising a gas electrode, an electrolyte conducting ions and a counter electrode comprising an active material, which is present as liquid at operating temperatures between 500 and 1000° C both in at least one reduced form and also in at least one oxidised form, in which the electrochemical energy store has a container, which comprises the active material, the liquid active material is present inside the container in the form of horizontal layers and the counter electrode is made exclusively from the liquid active material or from the liquid active material and a catalyst layer, ***characterised in that***
- the electrolyte conducting ions and the gas electrode are arranged perpendicular to the ground only on one side of the housing and
- the electrolyte conducting ions has a layer thickness of less than 500 µm.

2. Energy store according to claim 1,
in which the electrolyte has a solid catalyst layer on the side that is provided for contact with the liquid active material.

3. Energy store according to claim 1 or 2,
with a membrane conducting ions or protons as electrolyte.

4. Energy store according to one of claims 1 to 3,
in which the electrolyte conducting ions has a layer thickness of less than 10 µm.

5. Energy store according to one of claims 1 to 4,
with an active material from the group of metals, semimetals, simple or complex oxides, nitrogen compounds, carbon compounds, hydrides, phosphorous compounds, halogen compounds, other chalcogen compounds, silicon compounds, germanium compounds or boron compounds, as well as mixtures of at least two of the elements of this group.

6. Energy store according to one of claims 1 to 5,
with an active material made of bismuth.

7. Battery stack comprising at least two of the electrochemical energy stores according to one of claims 1 to 6.

8. Method for operating an electrochemical energy store according to one of claims 1 to 6,
- in which the energy store is heated to operating temperatures between 500 and 1000° C,
- in which the electrolyte conducting ions is aligned perpendicular to the ground,
- in which because of a difference in density between the phase made of liquid, oxidised active material and liquid, active material present in reduced form there is layering of both phases along the electrolyte conducting ions, and
- in which the active material is reduced or oxidised exclusively on the electrolyte conducting ions or on a solid catalyst layer arranged on the electrolyte conducting ions,
***characterised in that***
- there is a change in position of the energy store in the 3-dimensional space,
- so that in a charging cycle the contact surface between the electrolyte and the active material present in oxidised from is maximised and/or
- in a discharging cycle the contact surface between the electrolyte and the active material present in reduced form is maximised.

9. Method according to claim 8,
in which oxygen is used as oxidising agent,

10. Method according to claim 8 to 9,
in which a membrane conducting anions is used as electrolyte.

11. Method according to claim 8 to 10,
in which hydrogen is used as reducing agent.

12. Method according to claim 8 to 11,
in which a membrane conducting cations or protons is used as electrolyte.

13. Method according to one of claims 8 to 12,
in which an active material from the group (metals, semimetals, simple or complex oxides, nitrogen compounds, carbon compounds, hydrides, phosphorous compounds, halogen compounds, other chalcogen compounds, silicon compounds, germanium compounds or boron compounds) as well as mixtures of at least two of the elements of this group or bismuth are used.

14. Method according to one of claims 8 to 13,
in which the chemical conversion on the counter electrode with the liquid active material is supported by an additional catalyst layer applied to the electrolyte.

## Revendications

1. Accumulateur d'énergie électrochimique,
comprenant une électrode à gaz, un électrolyte conduisant les ions et une contre-électrode, comprenant une matière active, qui, à des températures de fonctionnement comprises entre 500 et 1000°C, se présente, en étant liquide, à la fois au moins sous une forme réduite et au moins sous une forme oxydée, l'accumulateur d'énergie électrochimique ayant un récipient, qui renferme la matière active, la matière active liquide se présentant à l'intérieur du récipient sous la forme de couches horizontales et la contre-électrode étant formée exclusivement de la matière active liquide ou de la matière active liquide et d'une couche de catalyseur, **caractérisé**
- **en ce que** l'électrolyte conduisant les ions et l'électrode à gaz ne sont disposées que d'un côté du boîtier, perpendiculairement à la surface de la terre et
- **en ce que** l'électrolyte conduisant les ions a une épaisseur de couche de moins de 500 µm.

2. Accumulateur d'énergie suivant la revendication 1,
dans lequel l'électrolyte a, du côté prévu pour le contact avec la matière active liquide, une couche solide de catalyseur.

3. Accumulateur d'énergie suivant la revendication 1 ou 2, comprenant, comme électrolyte, une membrane conduisant les ions ou les protons.

4. Accumulateur d'énergie suivant l'une des revendications 1 à 3,
dans lequel l'électrolyte conduisant les ions a une épaisseur de couche de moins de 10 µm.

5. Accumulateur d'énergie suivant l'une des revendications 1 à 4,
comprenant une matière active dans le groupe des métaux, metalloïdes, oxydes simples ou complexes, composés de l'azote, composés du carbone, hydrures, composés du phosphore, composés halogéné, d'autres composés chalcogénés, composés du silicium, composés du germanium ou composés du bore, ainsi que des mélanges d'au moins deux des éléments de ce groupe.

6. Accumulateur d'énergie suivant l'une des revendications 1 à 5,
comprenant une matière active en bismuth.

7. Empilement de batterie, comprenant au moins deux des accumulateurs d'énergie électrochimiques suivant l'une des revendications 1 à 6.

8. Procédé pour faire fonctionner un accumulateur d'énergie électrochimique suivant l'une des revendications 1 à 6,
- dans lequel on porte l'accumulateur d'énergie à des températures de fonctionnement comprises entre 500 et 1000°C,
- dans lequel on oriente l'électrolyte conduisant les ions perpendiculairement à la surface de la terre,
- dans lequel, en raison d'une différence de densité entre les phases de la matière liquide oxydée et de la matière active liquide présente sous forme réduite, il se produit une stratification des deux phases le long de l'électrolyte conduisant les ions et
- dans lequel la réduction ou l'oxydation de la matière active s'effectue exclusivement sur l'électrolyte conduisant les ions ou sur une couche solide de catalyseur disposée sur l'électrolyte conduisant les ions,
**caractérisé en ce que**
- il se produit une modification de couches de l'accumulateur d'énergie dans l'espace à trois dimensions,
- de manière à maximiser, lors d'un cycle de charge, la surface de contact entre l'électrolyte et la matière active se présentant sous forme oxydée et/ou
- de manière, lors d'un cycle de décharge, à maximiser la surface de contact entre l'électrolyte et la matière active se présentant sous forme réduite.

9. Procédé suivant la revendication 8,
dans lequel on utilise de l'oxygène, comme agent oxydant.

10. Procédé suivant la revendication 8 ou 9,
dans lequel on utilise une membrane conduisant les anions comme électrolyte.

11. Procédé suivant la revendication 8 à 10,
dans lequel on utilise de l'hydrogène comme agent réducteur.

12. Procédé suivant la revendication 8 à 11,
dans lequel on utilise une membrane conduisant les cations ou les protons comme électrolyte.

13. Procédé suivant l'une des revendications 8 à 12,
dans lequel on utilise une matière active dans le groupe (métaux, metalloïdes, oxydes simples ou complexes, composés de l'azote, composés du carbone, hydrures, composés du phosphore, composés halogéné, d'autres composés chalcogénés, composés du silicium, composés du germanium ou composés du bore), ainsi que mélanges d'au moins deux des éléments de ce groupe ou bismuth.

14. Procédé suivant l'une des revendications 8 à 13,
dans lequel on facilite la réaction chimique à la contre-électrode sur la matière active liquide par une couche de catalyseur supplémentaire déposée sur l'électrolyte.
